# EUROPÄISCHE PATENTANMELDUNG

(11) **EP 3 920 090 A1**
(43) Veröffentlichungstag der Anmeldung: **08.12.2021**
(21) Anmeldenummer: 21172581.7
(22) Anmeldetag: 06.05.2021
(51) Int. Cl.: G06K 9/00

(54) **VERFAHREN UND VORRICHTUNG ZUR BESTIMMUNG EINER WINKELPOSITION ZWISCHEN EINEM OBJEKT UND EINEM DETEKTOR**

(30) Priorität: 03.06.2020 DE 102020206893
(71) Anmelder: Pepperl+Fuchs SE, 68307 Mannheim (DE)
(72) Erfinder: Kirsch, Martin, 68542 Heddesheim (DE)
(74) Vertreter: Ullrich & Naumann PartG mbB

(57) **Zusammenfassung**

Im Hinblick auf eine genaue Bestimmung der Winkelposition mit konstruktiv einfachen Mitteln ist ein Verfahren zur Bestimmung einer Winkelposition zwischen einem Objekt (2) und einem Detektor (1) angegeben, wobei das Objekt (2) mehrere jeweils einem unterschiedlichen Blickwinkel oder Bereich von Blickwinkeln des Detektors (1) auf das Objekt (2) zugeordnete unterschiedliche vordefinierte Detektionsbereiche aufweist, wobei dem Objekt (2) eine zu einer winkelspezifischen Abbildung der Detektionsbereiche ausgebildete Abbildungseinrichtung derart zugeordnet wird, dass - je nach Blickwinkel des Detektors (1) auf das Objekt (1) - der Detektionsbereich, der diesem Blickwinkel oder dem diesen Blickwinkel enthaltenden Bereich zugeordnet ist, oder einer der diesem Blickwinkel oder einem derartigen, diesen Blickwinkel enthaltenden Bereich zugeordneten Detektionsbereiche von dem Detektor (1) - zumindest teilweise oder abschnittsweise - spezifisch detektiert wird, und wobei unter Berücksichtigung des - zumindest teilweise oder abschnittsweise - spezifisch detektierten Detektionsbereichs eine Winkelposition zwischen dem Objekt (2) und dem Detektor (1) bestimmt wird. Des Weiteren ist eine entsprechende Vorrichtung zur Bestimmung einer Winkelposition zwischen einem Objekt (2) und einem Detektor (1) angegeben.

## Beschreibung

Die Erfindung betrifft ein Verfahren zur Bestimmung einer Winkelposition zwischen einem Objekt und einem Detektor.

Des Weiteren betrifft die vorliegende Erfindung eine Vorrichtung zur Bestimmung einer Winkelposition zwischen einem Objekt und einem Detektor, insbesondere zur Durchführung des obigen Verfahrens zur Bestimmung eine Winkelposition zwischen einem Objekt und einem Detektor.

Verfahren und Vorrichtungen der eingangs genannten Art sind aus dem Stand der Technik bekannt. Beispielsweise ist ein Verfahren bekannt, wonach ein mittels des Detektors aufgenommenes Bild des Objekts im Hinblick auf eine winkelabhängige Verzerrung des aufgenommenen Bilds analysiert und eine Bestimmung einer Winkelposition zwischen dem Objekt und dem Detektor anhand des Ausmaßes der Verzerrung vorgenommen wird.

Insbesondere bei kleinen Winkeln zu einer Normalen auf ein flächiges Objekt ist eine Bestimmung einer Winkelposition anhand des Ausmaßes der Verzerrung jedoch sehr ungenau, da bei diesen kleinen Winkeln Bildänderungen aufgrund einer Cosinus-Abhängigkeit minimal sind.

Der vorliegenden Erfindung liegt daher die Aufgabe zugrunde, ein Verfahren sowie eine Vorrichtung zur Bestimmung einer Winkelposition zwischen einem Objekt und einem Detektor anzugeben, wonach eine genaue Bestimmung der Winkelposition mit konstruktiv einfachen Mitteln ermöglicht ist.

Erfindungsgemäß wird die voranstehende Aufgabe durch ein Verfahren mit den Merkmalen des Anspruchs 1 sowie durch eine Vorrichtung mit den Merkmalen des Anspruchs 15 gelöst.

Gemäß Anspruch 1 ist ein Verfahren zur Bestimmung einer Winkelposition zwischen einem Objekt und einem Detektor beansprucht,
wobei das Objekt mehrere jeweils einem unterschiedlichen Blickwinkel oder Bereich von Blickwinkeln des Detektors auf das Objekt zugeordnete unterschiedliche vordefinierte Detektionsbereiche aufweist,
wobei dem Objekt eine zu einer winkelspezifischen Abbildung der Detektionsbereiche ausgebildete Abbildungseinrichtung derart zugeordnet wird, dass - je nach Blickwinkel des Detektors auf das Objekt - der Detektionsbereich, der diesem Blickwinkel oder dem diesen Blickwinkel enthaltenden Bereich zugeordnet ist, oder einer der diesem Blickwinkel oder einem derartigen, diesen Blickwinkel enthaltenden Bereich zugeordneten Detektionsbereiche von dem Detektor - zumindest teilweise oder abschnittsweise - spezifisch detektiert wird, und
wobei unter Berücksichtigung des - zumindest teilweise oder abschnittsweise - spezifisch detektierten Detektionsbereichs eine Winkelposition zwischen dem Objekt und dem Detektor bestimmt wird.

Gemäß Anspruch 15 ist eine Vorrichtung zur Bestimmung einer Winkelposition zwischen einem Objekt und einem Detektor, insbesondere zur Durchführung des Verfahrens zur Bestimmung eine Winkelposition zwischen einem Objekt und einem Detektor nach einem der Ansprüche 1 bis 14, mit einem Detektor und mehreren Detektionsbereichen, beansprucht,
wobei das Objekt mehrere jeweils einem unterschiedlichen Blickwinkel oder Bereich von Blickwinkeln des Detektors auf das Objekt zugeordnete unterschiedliche vordefinierte Detektionsbereiche aufweist,
wobei dem Objekt eine zu einer winkelspezifischen Abbildung der Detektionsbereiche ausgebildete Abbildungseinrichtung derart zugeordnet ist, dass - je nach Blickwinkel des Detektors auf das Objekt - der Detektionsbereich, der diesem Blickwinkel oder dem diesen Blickwinkel enthaltenden Bereich zugeordnet ist, oder einer der diesem Blickwinkel oder einem derartigen, diesen Blickwinkel enthaltenden Bereich zugeordneten Detektionsbereiche von dem Detektor - zumindest teilweise oder abschnittsweise - spezifisch detektierbar ist, und
wobei unter Berücksichtigung des - zumindest teilweise oder abschnittsweise - spezifisch detektierten Detektionsbereichs eine Winkelposition zwischen dem Objekt und dem Detektor bestimmbar ist.

Zur Erläuterung der erfindungsgemäßen Lehre wird zur Vermeidung von Wiederholungen im Folgenden im Wesentlichen auf das erfindungsgemäße Verfahren Bezug genommen. In gleicher Weise gelten jedoch entsprechende Erklärungen und Beschreibungen der Erfindung und von Vorteilen der Erfindung auch in Bezug auf die erfindungsgemäße Vorrichtung.

Bei dem erfindungsgemäßen Verfahren werden dem Objekt erfindungsgemäß zunächst mehrere unterschiedliche vordefinierte Detektionsbereiche zugeordnet, wobei diese unterschiedlichen vordefinierten Detektionsbereiche jeweils einem unterschiedlichen Blickwinkel oder Bereich von Blickwinkeln des Detektors auf das Objekt zugeordnet werden. Das Objekt kann auch noch weitere Detektionsbereiche aufweisen. In jedem Fall existieren jedoch mehrere unterschiedliche vordefinierte Detektionsbereiche, die jeweils einem unterschiedlichen Blickwinkel oder Bereich von Blickwinkeln des Detektors auf das Objekt zugeordnet sind. Somit ist eine Verbindung zwischen einzelnen Blickwinkeln oder Bereichen von Blickwinkeln und einem vordefinierten Detektionsbereich hergestellt.

Des Weiteren wird dem Objekt eine Abbildungseinrichtung zugeordnet, die für eine winkelspezifische oder zu einer winkelspezifischen Abbildung der Detektionsbereiche ausgebildet ist. Dabei wird die Abbildungseinrichtung dem Objekt oder den Detektionsbereichen derart zugeordnet, dass - je nach Blickwinkel des Detektors auf das Objekt - derjenige Detektionsbereich, der diesem Blickwinkel zugeordnet ist oder der dem diesen Blickwinkel enthaltenden Bereich zugeordnet ist, von dem Detektor - zumindest teilweise oder abschnittsweise - spezifisch detektiert wird. Die Abbildungseinrichtung kann alternativ hierzu dem Objekt oder den Detektionsbereichen derart zugeordnet werden, dass - je nach Blickwinkel des Detektors auf das Objekt - einer der Detektionsbereiche, die diesem Blickwinkel oder einem derartigen, diesen Blickwinkel enthaltenden Bereich zugeordnet sind, von dem Detektor - zumindest teilweise oder abschnittsweise - spezifisch detektiert wird. Diese alternative Ausführungsform kommt dann zum Tragen, wenn es mehrere Detektionsbereiche gibt, die einem bestimmten Blickwinkel oder einem diesen Blickwinkel enthaltenden Bereich zugeordnet sind.

Der Detektor detektiert den Detektionsbereich spezifisch, wobei dies bedeutet, dass der Detektor ausschließlich, im Wesentlichen oder überwiegend denjenigen Detektionsbereich oder einen der Detektionsbereiche detektiert, die dem vorliegenden Blickwinkel des Detektors oder dem Bereich zugeordnet sind, der diesen vorliegenden Blickwinkel des Detektors enthält. Erforderlichenfalls kann zur Gewährleistung dieses spezifischen Detektierens oder diese Spezifität eine geeignete Auswerteeinrichtung bei der Detektion oder Erkennung des Detektionsbereichs hinzugezogen werden, wobei die Auswerteeinrichtung auf vorherige Detektion oder Erkennungen zurückgreifen oder mit statistischen Mitteln arbeiten kann. Für eine für die Bestimmung der Winkelposition ausreichende, aussagekräftige oder verwertbare Detektion oder Erkennung des Detektionsbereichs kann je nach Ausgestaltung der Detektionsbereiche eine teilweise oder abschnittsweise Detektion des Detektionsbereichs ausreichen.

Schließlich erfolgt unter Berücksichtigung des - zumindest teilweise oder abschnittsweise - spezifisch detektierten Detektionsbereichs eine Zuordnung oder Bestimmung Winkelposition zwischen dem Objekt und dem Detektor. Dabei kann auch bei kleinen Winkeln zwischen der Blickrichtung des Detektors und einer Normalen auf ein flächiges Objekt eine genaue Bestimmung der Winkelposition zwischen einem Objekt und einem Detektor erfolgen. Die Bestimmung erfolgt mit konstruktiv einfachen Mitteln, nämlich mit lediglich geschickt definierten und dem Objekt zugeordneten Detektionsbereichen sowie einer geeigneten Abbildungseinrichtung, wobei die Bestimmung vom Objekt aus betrachtet - insbesondere in einen Raumwinkel - erfolgen kann.

Folglich sind mit dem erfindungsgemäßen Verfahren und der erfindungsgemäßen Vorrichtung ein Verfahren und eine Vorrichtung bereitgestellt, wonach eine genaue Bestimmung der Winkelposition mit konstruktiv einfachen Mitteln ermöglicht ist.

Im Hinblick auf eine besonders sichere und einfache Ausgestaltung der Detektionsbereiche können die Detektionsbereiche jeweils mindestens einen Code aufweisen oder als Code ausgebildet sein. Dabei kann ein solcher Code insbesondere ein Data Matrix Code, QR-Code oder Barcode mit mehreren Balken sein. Hierdurch ist insbesondere eine genaue und sichere Bestimmung einer Winkelposition zwischen einem Objekt und einem Detektor, vorzugsweise vom Objekt aus betrachtet, ermöglicht.

In besonders vorteilhafter Weise kann jedem Blickwinkel oder Bereich von Blickwinkeln ein Code zugeordnet sein. Dies ermöglicht eine besonders weitreichende Positionsbestimmung bei jedem erdenklichen Blickwinkel des Detektors auf das Objekt, wobei die gesamte im jeweiligen Anwendungsfall mögliche Bewegungsfreiheit des Detektors bezüglich Bewegungen in einer Ebene oder in einem Raum umfasst sein kann. Je nach Ausgestaltung der Abbildungseinrichtung kann es hierbei besonders platzsparend und effizient sein, wenn mehrere derartiger Codes überlagert angeordnet oder übereinander auf einen Träger gedruckt sind. Ganz grundsätzlich kann ein derartiger Träger ein flächiges Bauteil wie beispielsweise eine Platte aus unterschiedlichen, quasi beliebigen Materialien sein. Je nach Winkelposition bzw. Blickwinkel des Detektors und/oder Ausgestaltung der Abbildungseinrichtung kann eine sehr enge Anordnung von Codeelementen aus Effizienzgründen und Gründen der Platzersparnis realisiert werden.

Zur Gewährleistung eines hohen Maßes an Diversifizierung bei der Ausgestaltung der Detektionsbereiche und im Hinblick auf eine besonders genaue und sichere Bestimmung einer Winkelposition können einfarbige oder mehrfarbige Codes oder Detektionsbereiche verwendet werden. Unterschiedlichen Blickwinkeln oder Bereichen von Blickwinkeln können dabei unterschiedliche Farben von Codes oder Detektionsbereichen zugeordnet werden. Derartige unterschiedliche Farben sind mit unterschiedlichen Remissionsspektren der Codes oder Detektionsbereiche verbunden. Je nach Farbe einer die Codes oder Detektionsbereiche illuminierenden Beleuchtung können somit unterschiedliche, von den jeweiligen Remissionsspektren der Codes oder Detektionsbereiche abhängige Codes oder Detektionsbereiche für den Detektor sichtbar gemacht werden.

Im Hinblick auf eine eindeutige Bestimmung einer Winkelposition kann das Objekt mehrere - insbesondere um eine halbe Breite, halbe Linienbreite oder halbe Phase eines Codes oder Detektionsbereichs - gegeneinander verschobene oder gegeneinander verkippte Codes oder Detektionsbereiche aufweisen. Dies ermöglicht, dass eine Abbildungseinrichtung je nach Blickwinkel und individueller Situation in alternativer Weise unterschiedliche Codes - entweder einen ersten Code oder Detektionsbereich oder einen weiteren, gegen den ersten Code oder Detektionsbereich verschobenen oder verkippten zweiten Code oder Detektionsbereich - bei der Bestimmung der Winkelposition nutzen kann. Dies ist in dem Fall sinnvoll, wenn je nach Blickwinkel und individueller Situation ein erster Code oder Detektionsbereich möglicherweise nicht so gut detektierbar oder erkennbar ist wie ein gegen diesen ersten Code oder Detektionsbereich verschobener zweiter Code oder Detektionsbereich. In besonders vorteilhafter Weise können vorzugsweise mehrere Codes oder Detektionsbereiche um einen vorgebbaren Winkel, insbesondere 90°, gegeneinander verdreht angeordnet sein. Die hier zugrundeliegende Problematik wird im Bereich der weiter unten beschriebenen beispielhaften Ausführungsbeispiele noch näher erläutert.

Im Hinblick auf eine besonders genaue und zuverlässige Winkelbestimmung und auch im Hinblick auf eine zuverlässige Ortsbestimmung eines Detektors relativ zu einem Objekt können mehrere Codes oder Detektionsbereiche an unterschiedlichen räumlichen Orten - insbesondere paarweise - angeordnet sein. Eine Anordnung Bereiche kann in zwei oder in drei Dimensionen erfolgen, um eine Ortsbestimmung in einer Ebene oder in einem Raum zu ermöglichen.

Zur Vermeidung einer ungewünschten Detektion von Codes oder Detektionsbereichen, die beispielsweise in einer benachbarten Anordnung zu denjenigen Codes oder Detektionsbereichen realisiert sind, die für die Bestimmung der Winkelposition relevant sind, kann oder können der Abbildungseinrichtung und/oder den Detektionsbereichen und/oder dem Detektor eine oder mehrere Trenneinrichtungen zugeordnet werden, sodass lediglich mehrere vordefinierte - nämlich die für die Bestimmung der Winkelposition relevanten - Detektionsbereiche mittels des Detektors detektiert werden. Hierdurch lassen sich falsche oder nicht eindeutige Bestimmungen der Winkelposition verhindern. Derartige Trenneinrichtungen können beispielsweise durch in geeigneter Weise zwischen den Codes oder Detektionsbereichen angeordnete Blenden realisiert werden.

Zur Gewährleistung einer besonders sicheren und genauen Bestimmung der Winkelposition können dem Objekt mehrere Abbildungseinrichtungen zugeordnet werden, die jeweils zu unterschiedlichen winkelspezifischen Abbildungen der Detektionsbereiche ausgebildet sind. Hierdurch ist es möglich, für einen einzelnen Blickwinkel des Detektors mit den mehreren Abbildungseinrichtungen mehrere unterschiedliche Codes oder Detektionsbereiche zu detektieren. Aus den detektierten Kombinationen von Codes oder Detektionsbereichen kann eine besonders genaue und vorzugsweise eindeutige Bestimmung der Winkelpositionen erfolgen. Bei einer derartigen Ausgestaltung mit mehreren Abbildungseinrichtungen sind Trenneinrichtungen häufig nicht erforderlich.

Im Hinblick auf eine sichere Bestimmung der Winkelposition kann das Objekt mit einer mehrfarbigen Beleuchtung oder unterschiedlichen Beleuchtungswellenlängen beleuchtet wird, wobei eine Zeitdauer und/oder eine Reihenfolge des Beleuchtens mit einer ersten Lichtfarbe oder Beleuchtungswellenlänge und einer zweiten Lichtfarbe oder Beleuchtungswellenlänge - vorzugsweise mittels einer Steuereinrichtung und weiter vorzugsweise zufällig oder pseudo-zufällig - vorgegeben werden oder wird. Eine derartige Ausführung ist insbesondere in Kombination mit farblich unterschiedlich gestalteten Codes oder Detektionsbereichen sinnvoll, die entsprechend ihrer farblichen Ausgestaltung ein unterschiedliches Remissionsspektrum aufweisen.

Je nach Blickwinkel des Detektors wird üblicherweise ein unterschiedlicher Code oder Detektionsbereich für den Detektor sichtbar. Die Sichtbarkeit hängt bei farbig ausgebildeten Codes oder Detektionsbereichen auch von einer hierzu passenden Beleuchtungswellenlänge für die Codes oder Detektionsbereiche ab. Bei quasi übereinander oder in geeigneter Weise nebeneinander angeordneten farblich unterschiedlichen Codes oder Detektionsbereichen wird dann nur derjenige Code oder Detektionsbereich - bei einem zugehörigen Blickwinkel - von dem Detektor erkannt, zu dem die Beleuchtungsfarbe oder Beleuchtungswellenlänge derart passt, dass eine Detektion durch den Detektor möglich ist. Bei beispielsweise roten und grünen Codes oder Detektionsbereich wird ein Code oder Detektionsbereich als dunkler Code oder Detektionsbereich erkannt, wenn entsprechend mit grüner oder roter Beleuchtungswellenlänge beleuchtet wird. Ein mit roter Beleuchtungswellenlänge beleuchteter roter Code oder Detektionsbereich oder mit grüner Beleuchtungswellenlänge beleuchteter grüner Code oder Detektionsbereich wird hingegen zu einer hellen Remission führen, sodass der Detektor kein dunkles Signal wahrnehmen kann.

Wird in einem solchen Fall bei einem gewählten Blickwinkel die Zeitdauer und/oder Reihenfolge der Lichtfarbe oder Beleuchtungswellenlänge mittels beispielsweise einer Steuereinrichtung zufällig oder pseudo-zufällig vorgegeben, so erfolgt eine Detektion durch den Detektor entsprechend dieser Vorgabe. Vergleicht man die von der Steuereinrichtung vorgegebene Zeitdauer und/oder Reihenfolge mit dem Detektionsergebnis durch den Detektor, so kann man einen Rückschluss auf ein Funktionieren oder eine Fehlfunktion der Bestimmung der Winkelposition mit der vorliegenden Vorrichtung ziehen. Entspricht das Detektionsergebnis nicht der Vorgabe durch die Steuereinrichtung, so liegt eine Fehlfunktion vor und die Bestimmung der Winkelposition zwischen Objekt und Detektor ist nicht sicher.

Hierbei können ein mehr farbiger Code oder Detektionsbereich oder mehrere einfarbige Codes oder Detektionsbereiche in geeigneter relativer Anordnung zueinander verwendet werden.

Bei einer konkreten Ausführungsform kann eine zweifarbige Beleuchtung eingesetzt werden, die zur Beleuchtung des Objekts dient, wobei je nach Beleuchtungswellenlänge ein anderer Code oder Detektionsbereich vom Detektor erkannt wird. Über einen derartigen Wechsel der Beleuchtungsfarbe kann beispielsweise ein eingefrorenes Bild bzw. eine eingefrorene Bildgebung erkannt werden. Dabei kann insbesondere ein monochromer Detektor oder eine monochrome Kamera zur Bildaufnahme verwendet werden. Eine nicht-sichere Auswerteeinheit kann das Detektionsergebnis oder Bild auswerten und einen Winkel je nach Sichtbarkeit des Codes oder Detektionsbereichs bestimmen. Eine überlagerte Steuereinrichtung oder Auswerteeinrichtung kann dann prüfen, ob das decodierte Detektionsergebnis oder Bild zur vorgegebenen Beleuchtungswellenlänge oder Beleuchtungsfarbe passt. Hieraus ergibt sich der Vorteil, dass die nicht-sichere Auswerteeinheit jederzeit auf eine Fehlfunktion überprüft werden kann.

Im Hinblick auf eine besonders große Reichweite der Bestimmung der Winkelposition bei einer großen Distanz zwischen Detektor und Objekt kann in Blickrichtung des Detektors hinter dem Objekt ein Reflektor, vorzugsweise Retroreflektor, angeordnet sein. Dies ermöglicht eine besonders sichere Detektion des Codes oder Detektionsbereichs durch den Detektor, da eine Menge an reflektiertem Licht mittels eines derartigen Reflektor - gegenüber einer Situation ohne Reflektor - deutlich erhöht werden kann.

Weiterhin hinsichtlich einer besonders genauen und/oder redundanten Bestimmung der Winkelposition kann eine Winkelposition zwischen dem Objekt und dem Detektor zusätzlich anhand einer winkelabhängigen optischen Verzerrung des vom Detektor aufgenommenen Bildinhalts bestimmt werden und vorzugsweise mit der unter Berücksichtigung des - zumindest teilweise oder abschnittsweise - spezifisch detektierten Detektionsbereichs bestimmten Winkelposition verglichen werden. Entsprechend aus diesen beiden Verfahren bestimmte Winkelpositionen sollten zum gleichen Ergebnis führen, wodurch sich dann eine besonders hohe Genauigkeit der Bestimmung ergibt.

In besonders vorteilhafter Weise und im Hinblick auf eine besonders genaue und sichere Bestimmung der Winkelposition kann die Abbildungseinrichtung zur winkelspezifischen Abbildung eine Lentikular/Prismeneinrichtung, insbesondere Lentikularfolie mit parallel zueinander angeordneten Zylinderlinsen, eine codierte Linse, insbesondere ein Gobo, Graphical optical blackout, oder eine Linse, die eine 3D-Orientierung ermöglicht, beispielsweise eine Facettenlinse, aufweisen. Beispielsweise kann eine Lentikularfolie auf ein Objekt, Code oder Detektionsbereich direkt angeordnet werden. Eine codierte Linse kann durch Aliasing (Moire) mit Druckbild eine winkelspezifische Abbildung erzeugen.

Weiterhin in besonders vorteilhafter und einfacher Weise kann als Detektor eine monochrome Kamera, insbesondere eine Kamera mit einem Pixelsensor, verwendet werden, wobei vorzugsweise der Pixelsensor als CMOS-Sensor oder CCD-Sensor oder als Zeilensensor ausgebildet sein kann.

Bei einem konkreten Anwendungsfall kann der Detektor einem Fahrzeug, insbesondere einem fahrerlosen Transportfahrzeug, zugeordnet sein, dessen Position und insbesondere Winkelposition relativ zu einem Objekt üblicherweise sicher und genau zu bestimmen ist. Derartige Fahrzeuge können beispielsweise in Lagersystemen oder sonstigen industriellen Prozessanlagen zum Einsatz kommen.

Insbesondere in Zusammenhang mit einem einem Fahrzeug zugeordneten Detektor kann das Objekt ein Codeband oder eine zweidimensionale Anordnung mehrerer Codes sein. Eine Winkelbestimmung erfolgt hierbei zwischen dem Fahrzeug und entsprechenden Codes.

Bei einer alternativen Ausführungsform kann das Objekt selbst ein Fahrzeug sein, insbesondere ein fahrerloses Transportfahrzeug, wobei vorzugsweise das Fahrzeug zusätzlich einen Detektor aufweisen kann. In einem solchen Fall kann eine Bestimmung der Winkelposition zwischen beispielsweise zwei Fahrzeugen erfolgen, die jeweils einen Detektor aufweisen.

Bei einer konkreten Ausführungsform kann mittels einer Lentikularfolie und einem geeigneten Detektor, beispielsweise eine Kamera oder ein Lesegerät, ein blickwinkelabhängiger Code gelesen werden. Anhand des erkannten Codes können dann der Winkel zwischen Detektor und Code oder einem Träger des Codes bestimmt werden.

Zur Bestimmung der Winkelposition ist es in vorteilhafter Weise nicht erforderlich, dass das Objekt eine aktive Komponente aufweist.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele des erfindungsgemäßen Verfahrens sowie der erfindungsgemäßen Vorrichtung anhand der Zeichnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert. In der Zeichnung zeigen
- Fig. 1: in einer perspektivischen Darstellung eine beispielhafte Anordnung aus einem Detektor und einem Objekt,
- Fig. 2: in einer Übersichtsdarstellung das grundlegende Prinzip einer Kombination mehrerer Codes für ein Zusammenwirken mit einer Lentikularfolie,
- Fig. 3: in einem Querschnitt eine beispielhafte Anordnung gemäß einem Ausführungsbeispiel der Erfindung, wobei eine Anordnung von mehreren nebeneinander angeordneten Modulen eines Codes mit einer darüber angeordneten Lentikularfolie gezeigt ist,
- Fig. 4: in einer Draufsicht ein Ausführungsbeispiel eines kombinierten Codes, der aus vier einzelnen Codes gebildet ist,
- Fig. 5: in einer Draufsicht ein weiteres Ausführungsbeispiel eines kombinierten Codes, bei dem ein Muster zweifach wiederholt ist,
- Fig. 6: in einer schematischen Darstellung eine Anordnung mit zwei phasenverschobenen kombinierten Codes,
- Fig. 7: in einer Draufsicht eine Anordnung von vier Codes und vier Lentikularfolien gemäß einem weiteren Ausführungsbeispiel der Erfindung,
- Fig. 8 und 9: in einer schematischen Darstellung jeweils das von dem Detektor gesehene Muster für Lentikularfolien mit jeweils unterschiedlichem Öffnungswinkel,
- Fig. 10: in einer schematischen Darstellung eine Anordnung der erkannten Muster der beiden Lentikularfolien aus den Fig. 8 und 9,
- Fig. 11: ein Schema, anhand dessen man die Winkelposition bestimmen kann,
- Fig. 12 und 13: in einer Draufsicht Anordnungen von Codes I und Codes II mit entsprechenden Lentikularfolien gemäß weiteren Ausführungsbeispielen der Erfindung,
- Fig. 14 und 15: weitere Ausführungsbeispiele im Hinblick auf die Bestimmung der Position eines Detektors relativ zu einem Objekt,
- Fig. 16: in einer schematischen Darstellung zwei relativ zueinander positionierte Fahrzeuge mit relativer Lokalisierung,
- Fig. 17: in einer schematischen Darstellung ein weiteres Ausführungsbeispiel der Erfindung mit einem Codeband und
- Fig. 18: in einer schematischen Darstellung ein weiteres Ausführungsbeispiel der vorliegenden Erfindung.

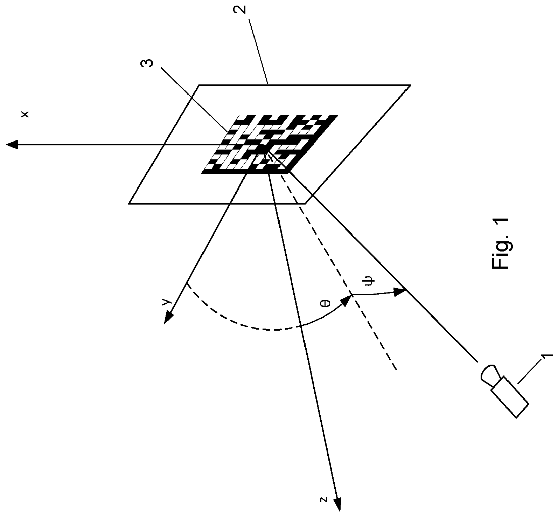

Fig. 1 zeigt in einer perspektivischen Darstellung eine beispielhafte Anordnung aus einem Detektor 1 und einem auf einem Objekt 2 angeordneten Detektionsbereich. Dabei ist der Detektor 1 als Kamera, das Objekt 2 flächig als Platte und der Detektionsbereich als Data-Matrix Code 3 ausgebildet. Der Detektor 1 und das Objekt 2 sind in einem durch das Objekt 2 aufgespannten Koordinatensystem angeordnet, sodass eine Bestimmung einer Winkelposition anhand von Winkeln θ - horizontaler Winkel um die x-Achse - und Ψ - vertikaler Winkel um die y-Achse - erfolgen kann. Der Detektor 1 ist mit seinem Blickwinkel auf das Objekt 2 gerichtet.

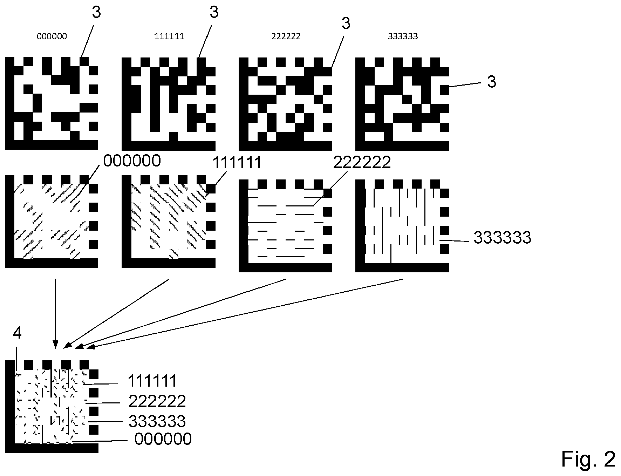

Fig. 2 zeigt ein grundlegendes Prinzip einer Kombination mehrerer Data-Matrix Codes 3, hier vier Data-Matrix Codes 3, die von links nach rechts in Fig. 2 einen unterschiedlichen Inhalt 000000, 111111, 222222 und 333333 aufweisen. Die Codes 3 weisen von links nach rechts in einer 1. Zeile eine einfarbige Darstellung - schwarz auf weiß - auf. Der Übersichtlichkeit halber ist die Unterschiedlichkeit hinsichtlich des Inhalts in der 2. Zeile durch eine unterschiedliche Strichelung oder Schraffierung angedeutet. In der 3. Zeile sind die vier Codes 3 kombiniert, sodass jeweils ein Teil vom 1. Code 3, dann vom 2. Code 3, dann vom 3. Code 3 und schließlich vom 4. Code 3 verwendet ist. Entsprechend ergibt sich beispielsweise ein Modul 4, das von links nach rechts vier dünne vertikale Bereiche aufweist, die eine unterschiedliche Strichelung oder Schraffierung aufweisen. Bei diesem Modul 4 ist also eine Kombination von allen vier Codes 3 und damit allen vier Farben realisiert.

Über den so erzeugten Code 3 wird nun eine Lentikularfolie 5 angeordnet, die Lentikularlinsen 6 aufweist, die genau die Breite eines Moduls 4 aufweisen. Die Lentikularfolie 5 und damit die Lentikularlinsen 6 weisen eine von oben nach unten gerichtete Orientierung auf.

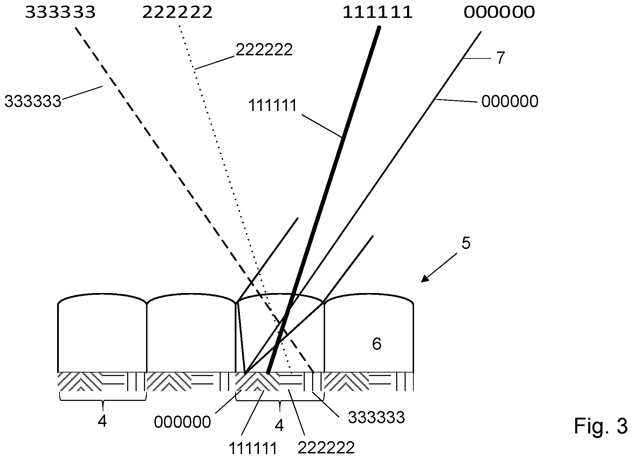

Fig. 3 zeigt eine derartige Anordnung im Querschnitt, wobei fünf Module 4 nebeneinander angeordnet sind und eine Lentikularfolie 5 mit Lentikularlinsen 6 über den Modulen angeordnet ist. Hierbei weisen die einzelnen Module 4 wieder eine Reihenfolge der Strichelung oder Schraffierung entsprechend Fig. 2 auf. Je nach Blickrichtung oder Blickwinkel ist eine unterschiedliche Strichelung oder Schraffierung zu sehen. Dabei ist beispielsweise in Richtung 7 der von links unten nach rechts oben schraffierte Teil zu sehen, der zum Code 3 mit dem Inhalt 000000 gehört. Die Achse der Zylinderlinsen oder Lentikularlinsen 6, die die Lentikularfolie 5 bilden, ragen senkrecht aus der Zeichenebene heraus. Der gewünschte Betrachtungseffekt tritt bei einer Drehung um eine zu den Achsen der Zylinderlinsen oder Lentikularlinsen 6 parallele Achse in optimaler Weise auf. Bei einer solchen Drehung oder einem solchen Verschwenken des Detektors 1 werden je nach Blickwinkel die unterschiedlichen Strichelungen oder Schraffierungen oder Inhalte der einzelnen Codes 3 sichtbar. Ein Drehen oder Verschwenken um eine zu einer Achse der Zylinderlinsen oder Lentikularlinsen 6 senkrechte Achse zeigt den gewünschten Effekt nicht.

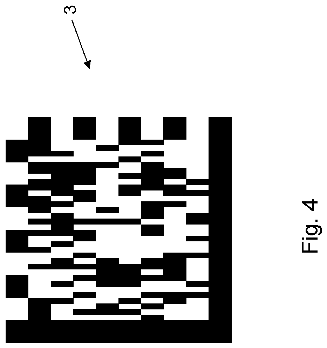

Die Strichelungen oder Schraffierungen werden hier nur zur Verdeutlichung verwendet. Tatsächlich sind die Codes 3 bei diesem Ausführungsbeispiel ohne Farben und ohne Strichelung oder Schraffierung nur einfarbig, insbesondere schwarz auf weiß gedruckt. Durch die Verwendung der Lentikularfolie 5, die im Wesentlichen aus einer Aneinanderreihung von Zylinderlinsen, den Lentikularlinsen 6 besteht, sind mehrere Codes 3, im vorliegenden Fall vier Codes 3, in einem kombinierten Code 3 gemäß Fig. 4 enthalten. Die einzelnen Codes 3 werden mit schmaleren Strichelungen oder Schraffierungen oder vertikalen Bereichen gedruckt. Durch die Lentikularlinse 6 findet wieder eine Vergrößerung statt, sodass sich im Detektorbild oder Kamerabild ein gewohnter Code 3 mit üblichen Maßen ergibt.

Die Auswahl, welches Bild gesehen wird, erfolgt durch die Winkelstellung und damit den Blickwinkel des Detektors 1 oder der Kamera zum Code 3, genauer gesagt der Winkel zwischen einer optischen Achse des Detektors 1 oder der Kamera und der Flächennormalen des Codes 3 oder Codeträgers.

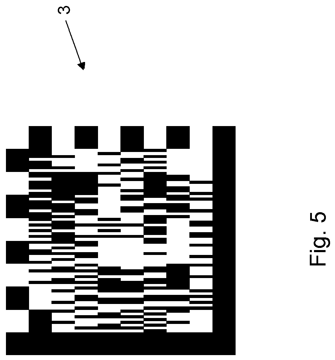

Da ein übliches Modul 4 mit einer üblichen Breite von 3 mm typischerweise breiter ist als das Lentikularraster, das meist 40 dpi bzw. 0,635 mm beträgt, wird - damit ein Lesen aus größeren Entfernungen ermöglicht ist - das Muster bei einem vorteilhaften Ausführungsbeispiel mehrfach wiederholt, bis das nächste Modul 4 beginnt. Dies ist in Fig. 5 für den beispielhaften Fall von zwei Wiederholungen gezeigt.

Bei einem aus mehreren einzelnen Codes 3 kombinierten Code 3 ergibt sich je nach Blickwinkel - vom Betrachter aus nach rechts oder links sich bewegend - eine andere Ansicht mit einem anderen Bildinhalt und somit ein komplett anderer Code 3.

Der sichtbare Code 3 ist nur vom Blickwinkel abhängig, aus dem heraus das Objekt 2 betrachtet wird.

Gegenüber einer bekannten Bestimmung der Winkelposition aus einer winkelabhängigen aufgenommenen Verzerrung hat die vorliegende Erfindung den Vorteil, dass der Codeinhalt nur von der Blickrichtung bzw. dem Blickwinkel abhängt und nicht von mathematischen Berechnungen aus dem aufgenommenen Bild.

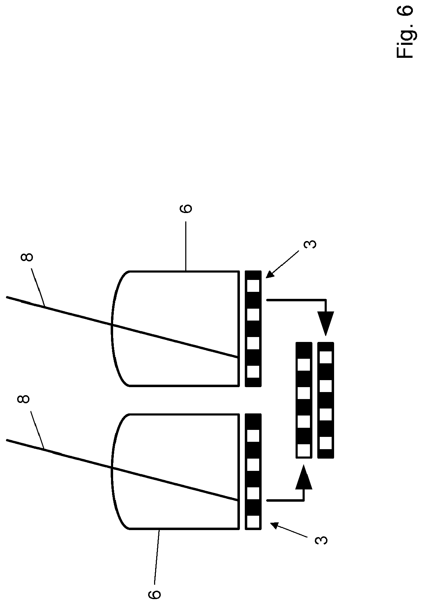

Wenn sich der Detektor 1 oder eine Kamera gerade im Übergangsbereich zwischen zwei blickwinkelabhängigen Ansichten bzw. zu erkennenden einzelnen Codes 3 befindet, kann es vorkommen, dass der Code 3 - also keiner von zwei angrenzenden Codes 3 - nicht eindeutig gelesen werden kann. Zur Vermeidung einer solchen unklaren Situation kann ein zweiter Code oder zweiter kombinierter Code 3, der vorzugsweise einen anderen Inhalt aufweist, um eine halbe vorzugsweise gedruckte Linienbreite verschoben angeordnet werden. In Fig. 6 ist hierzu im linken Bereich ein kombinierter Code 3 und ein Sichtstrahl 8 von einem Detektor 1 unter einem vorgegebenen Blickwinkel zu sehen, wobei der Sichtstrahl 8 gerade zwischen zwei hier schwarz und weiß dargestellten Bereichen abbildet. Der Detektor 1 oder die Kamera sieht in diesem Fall einen Zwischenwert und kann keinen Code 3 eindeutig erkennen. Im rechten Bereich der Fig. 6 ist ein verschobener kombinierter Code 3 dargestellt. Der Sichtstrahl 8 trifft hier bei gleichem Blickwinkel exakt auf die Mitte eines Bereichs bzw. eines Codes 3 und kann den Code 3 daher eindeutig erkennen. Im unteren Bereich der Fig. 6 ist diese Phasenverschiebung der beiden kombinierten Codes 3 des linken und des rechten Bereichs deutlich zu erkennen. Das Problem des Übergangsbereichs ist hiermit beseitigt.

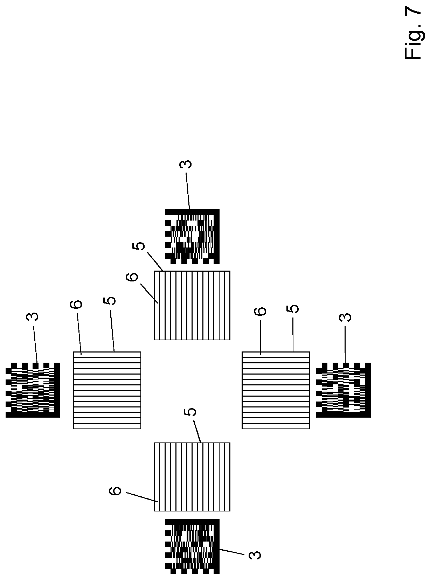

Fig. 7 zeigt eine weitere vorteilhafte Ausführungsform zur sicheren Bestimmung einer Winkelposition eines Objekts 2 im Raum. Dabei sind vier Lentikularfolien 5 mit horizontal oder vertikal ausgerichteten Lentikularlinsen 6 gezeigt, wobei jeweils zwei Lentikularfolien 5 horizontal und zwei Lentikularfolien 5 vertikal ausgerichtete Lentikularlinsen 6 aufweisen. Die jeweiligen Lentikularfolien 5 sind den in der Zeichenebene darüber oder daneben angeordneten kombinierten Codes 3 zugeordnet, wobei auch die Codes 3 jeweils in passender Weise zu den zugehörigen Lentikularfolien 5 ausgerichtet sind. Bei einer realen Ausführungsform befinden sich die Lentikularfolien 5 selbstverständlich direkt über den jeweiligen Codes 3, vorzugsweise auf einen Träger gedruckt. Die jeweils in gleicher Richtung ausgerichteten Codes 3 sind um eine halbe Phase verschoben angeordnet oder gedruckt. Somit sind immer mindestens zwei Codes 3 - in Fig. 7 der obere oder der untere bzw. der linke oder der rechte Code 3 - eindeutig zu erkennen, sodass beide Raumwinkel eindeutig bestimmt werden können. Insoweit kann eine komplette dreidimensionale Bestimmung der Winkelposition erfolgen.

Bei einer weiteren Ausführungsform müssen die Lentikularfolien 5 mit ihren Lentikularlinsen 6 und kombinierten Codes 3 nicht - wie in Fig. 7 gezeigt - in einer Ausrichtung von 90° zueinander angeordnet sein. Eine Einschränkung auf diesen Winkel besteht nicht. Vielmehr können beliebige unterschiedliche Winkel gewählt werden, um eine sichere Bestimmung der Winkelposition in einem dreidimensionalen Raum zu ermöglichen. Grundsätzlich können die Codes 3 an unterschiedlichen Orten im Raum, beispielsweise paarweise, angebracht sein, um die Bestimmung von zwei Winkeln zu ermöglichen.

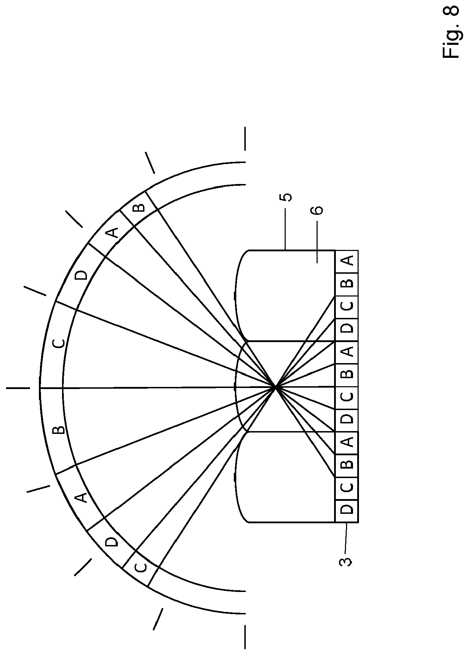

Ein Problem, das sich bei Lentikularfolien 5 ergeben kann, besteht darin, dass sich das gesehene Muster eines Codes 3 ab einem bestimmten Blickwinkel wiederholt. Das ist speziell bei einer sicheren Positionierung unvorteilhaft und in Fig. 8 anhand der Farben rot, grün, blau und gelb gezeigt, die jeweils den Buchstaben D, C, B und A entsprechen. Das Problem ergibt sich aufgrund einer fehlenden Abschottung oder Trenneinrichtung zwischen den einzelnen Lentikularlinsen 6. Insoweit ist die Realisierung von Abschottungen oder Trenneinrichtungen zwischen den einzelnen Lentikularlinsen 6 im Hinblick auf eine sichere Bestimmung der Winkelposition sinnvoll.

Alternativ zu derartigen Abschottungen oder Trenneinrichtungen können mehrere Abbildungseinrichtungen in Form von beispielsweise Lentikularfolien 5 verwendet werden, die jeweils zu unterschiedlichen winkelspezifischen Abbildungen der Detektionsbereiche oder Codes 3 ausgebildet sind.

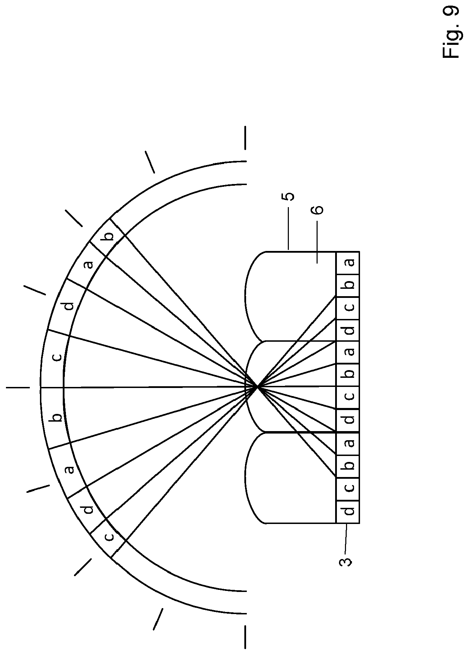

Fig. 8 zeigt hier eine Lentikularfolie 5 mit einer vorgegebenen winkelspezifischen Abbildungsfähigkeit. Entsprechend sind hier die durch die Farben rot, grün, blau und gelb angezeigten Winkelbereiche oder Blickwinkel dimensioniert, innerhalb derer die jeweiligen roten, grünen, blauen und gelben Codes 3 erkannt werden können. Fig. 9 zeigt eine andere Lentikularfolie 5 mit Lentikularlinsen 6, wobei hier die entsprechenden Winkelbereiche oder Blickwinkel - im Vergleich mit der Lentikularfolie 5 aus Fig. 8 - unterschiedlich dimensioniert sind. In Fig. 8 ist somit eine andere Lentikularfolie 5 eingesetzt, welche einen anderen Öffnungswinkel aufweist und dahinter in vorteilhafter Weise auch noch einen anderen Code 3 aufweist, der die Farben hellrot, hellgrün, hellblau und hellgelb aufweist, die jeweils den Buchstaben d, c, b und a entsprechen.

Die Fig. 8 und 9 zeigen somit jeweils das von dem Detektor 1 gesehene Muster für Lentikularfolien 5 mit unterschiedlichem Öffnungswinkel und unterschiedlichen Codefarben. Der im oberen Bereich der Fig. 8 und 9 dargestellte Halbkreis zeigt die Farben, die für den jeweiligen Code gesehen werden.

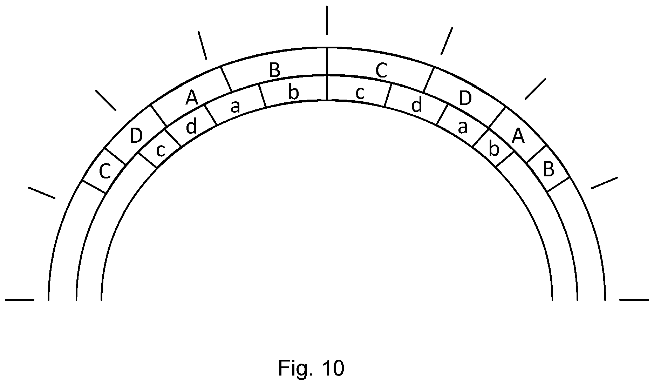

Zur Verdeutlichung zeigt des Weiteren Fig. 10 die beiden Halbkreise aus den Fig. 8 und 9, die das Bild des Codes 3 darstellen, übereinander angeordnet. Für jede Winkelposition bzw. jeden Blickwinkel ergibt sich eine eindeutige Kombination von zwei Farben, was letztlich einem eindeutig erkennbaren Code 3 entspricht. Insoweit werden hier zwei unterschiedliche Lentikularfolien 5 zusammen eingesetzt, um eine eindeutige Bestimmung der Winkelposition zu ermöglichen. Dabei darf nochmals betont werden, dass dieser Code 3 schwarz auf weißem Träger gedruckt sein kann.

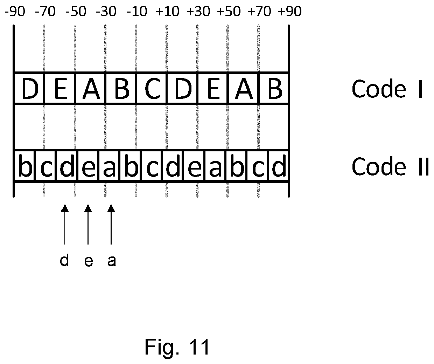

Weiterhin ist in Fig. 11 ein Schema dargestellt, anhand dessen man die Winkelposition bestimmen kann. Dabei sind ein Code I und ein Code II mit jeweils unterschiedlicher winkelspezifischer Abbildung aufgelistet. Wird nun der Code I in Abhängigkeit vom Blickwinkel als A gelesen, so kann der Code II entweder als d, e oder a gelesen werden, wobei sich der Blickwinkel dann im Winkelbereich zwischen -30° und - 50° befindet, oder es kann der Code II als b oder c gelesen werden, wobei sich der Blickwinkel dann im Winkelbereich zwischen +50° und +70° befindet.

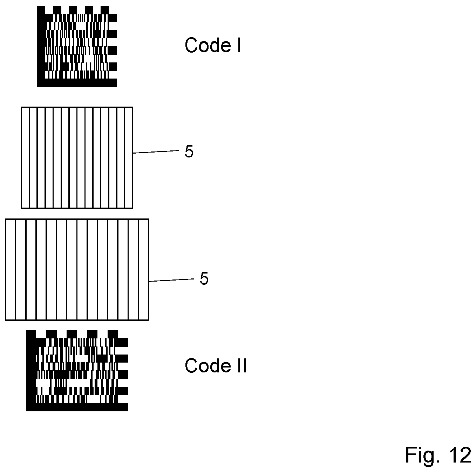

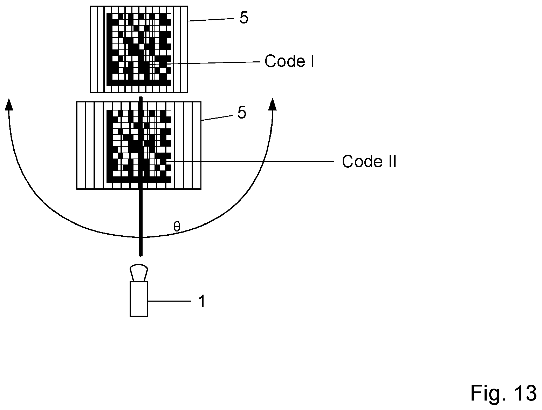

Beispielhafte derartige Anordnungen von Codes I und Codes II mit entsprechenden Lentikularfolien 5 sind in den Fig. 12 und 13 gezeigt. Dabei liegen die beiden Lentikularfolien 5 nebeneinander, aber beide im Lesefenster des Detektors 1 oder der Kamera, sodass die beiden Codes I und II gleichzeitig erkannt werden können.

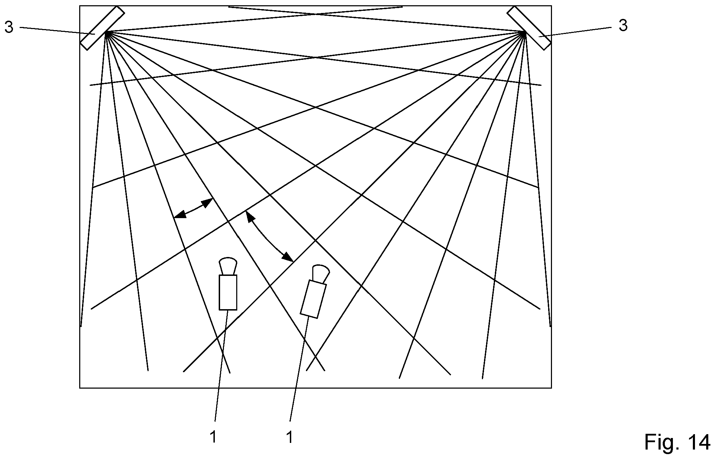

Fig. 14 zeigt in einer schematischen Darstellung eine Lokalisierung zweier Detektoren 1 in einem zweidimensionalen Bereich oder in einer Ebene. Des Weiteren sind zwei Codes 3 an geeigneten Positionen angeordnet. Das Verfahren lässt sich analog auch auf eine dritte Dimension und noch weitere Codes 3 erweitern. In den oberen beiden Ecken der vorliegenden Darstellung sind 2 unterschiedliche Codes 3 angebracht. Im unteren Bereich sind die beiden als Kameras ausgebildeten Detektoren 1 gezeigt. Jede Kamera erkennt unterschiedliche Codes 3. Da der Bereich oder Winkelbereich, in dem ein Code 3 winkelabhängig gelesen werden kann, durch strahlenförmige Linien und Pfeile begrenzt ist, kann über eine Triangulation bei bekanntem Layout der Anordnung die Position der Kameras eindeutig und sicher bestimmt werden.

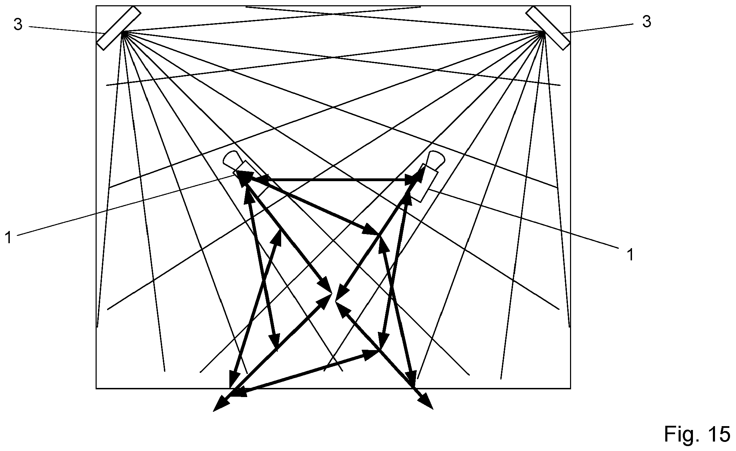

Gemäß der Darstellung in Fig. 15 ist es in einem Fall, in dem mehrere als Kamera ausgebildete Detektoren 1 eingesetzt werden und jede Kamera nicht alle Codes 3 erkennen kann, möglich, die Position der Kameras durch ein Ausschlussverfahren einzugrenzen. Dabei ist bei dem hier gezeigten Ausführungsbeispiel der Abstand der Kameras zueinander bekannt, wobei die linke Kamera nur den linken Code 3 und die rechte Kamera nur den rechten Code 3 erkennt. Die dicken Pfeile zeigen verschiedene Möglichkeiten von Positionen der Kameras bei gleichem Abstand der Kameras zueinander auf, wobei hierdurch der Aufenthaltsbereich trotz fehlender exakter Informationen deutlich eingegrenzt werden kann.

Aufgrund des gelesenen Codes 3 kann bei den in den Fig. 14 und 15 gezeigten Ausführungsbeispielen festgestellt werden, unter welchem Winkel die Kamera den Code 3 gelesen hat. Hierbei kann der Winkel zwischen einer optischen Achse der Kamera und der Flächennormalen des Codes 3 gemeint sein, wobei davon ausgegangen wird, dass der Code 3 auf einem flächigen Träger wie beispielsweise Papier angeordnet oder gedruckt ist.

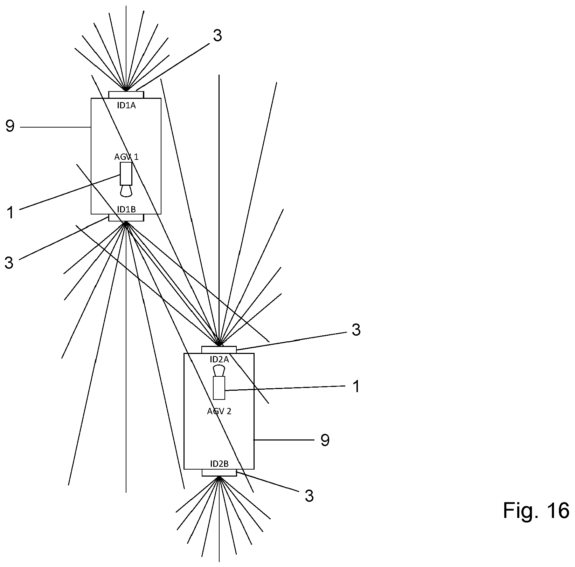

Fig. 16 zeigt in einer schematischen Darstellung zwei Fahrzeuge 9 - AGV 1 und AGV 2 - mit jeweils einem Detektor 1 und zwei Codes 3. Die Codes 3 sind auf unterschiedlichen Seiten der Fahrzeuge 9 angeordnet. Es können auch mehr als die gezeigten beiden Codes 3 an einem Fahrzeug 9 angeordnet werden. Die Codes 3 enthalten eine Identifizierung ID1A, ID1B, ID2A und ID2B, die jeweils einem Fahrzeug 9 zugeordnet ist, sowie eine Winkelinformation. Über die Kamera bzw. den Detektor 1 auf jedem Fahrzeug 9 wird das jeweils andere Fahrzeug 9 erkannt. Die Identifizierung des anderen Fahrzeugs 9 und der eigene Winkel zu diesem Fahrzeug 9 kann direkt bestimmt werden.

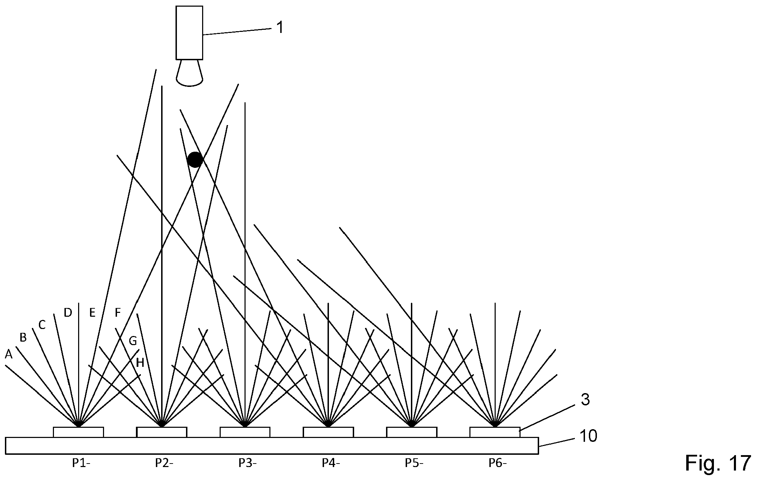

Fig. 17 zeigt ein weiteres Ausführungsbeispiel der Erfindung, wobei im unteren Bereich der Fig. 17 ein Codeband 10 realisiert ist, das verschiedene Positionscodes oder Codes 3 enthält. Das Codeband 10 kann auch zweidimensional realisiert werden, wobei dann anstelle einer Position und eines Abstands noch eine zweite Position bestimmt werden kann. Hierzu muss entweder ein Lentikularsystem eingesetzt werden, das in zwei Richtungen andere Codes 3 anzeigt oder die Codes 3 müssen abwechselnd in verschiedenen Ausrichtungen einer Lentikularfolie 5 angeordnet werden. Bei dem Ausführungsbeispiel sei die Kamera oder der Detektor 1 an dem schwarzen Punkt, wobei die Kamera dort grundsätzlich die Codes P1-F, P2-E, P3-D, P4-B, P5-A und P6-A erkennen kann. Über ein Ausschlussverfahren kann je nach Anzahl und Art der erkannten Codes die Position der Kamera entlang der Achse des in der Zeichenebene angeordneten Codebands 10 und der Abstand vom Codeband 10 bestimmt werden.

Anhand des codierten Winkels kann die Codedarstellung bestimmt werden, die gerade unter der Kamera liegt. Damit kann die Position in Bruchteilen der Größe des Lesefensters der Kamera bestimmt werden.

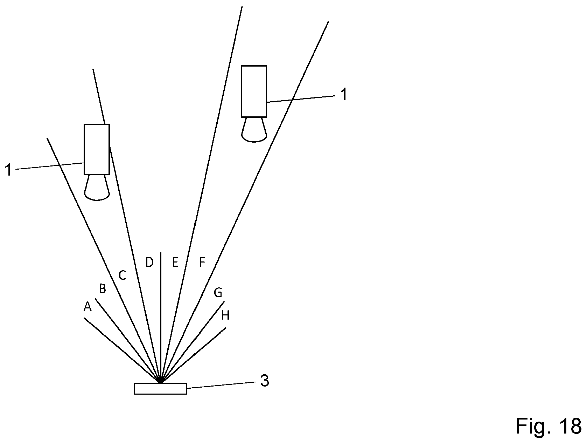

Fig. 18 zeigt in einer schematischen Darstellung ein weiteres Ausführungsbeispiel der vorliegenden Erfindung. Dabei kann in Kombination mit beispielsweise einem E-Paper auch eine Kommunikation realisiert werden, welche in verschiedene Richtungen verschiedene Informationen aussendet. Gemäß dem Ausführungsbeispiel in Fig. 18 erkennt die linke Kamera oder der linke Detektor 1 die Information C und die rechte Kamera oder der rechte Detektor 1 die Informationen F, wobei beide Kameras oder Detektoren 1 den gleichen Code 3 lesen können.

Im Hinblick auf die zuvor beschriebenen Ausführungsbeispiele darf festgehalten werden, dass beliebige Kombinationen der Ausführungsbeispiele realisiert werden können und dabei die beschriebenen vorteilhaften Wirkungen zeigen können.

Hinsichtlich weiterer vorteilhafter Ausgestaltungen des erfindungsgemäßen Verfahrens sowie der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: Detektor
- 2: Objekt
- 3: Code
- 4: Modul
- 5: Lentikularfolie
- 6: Lentikularlinse
- 7: Richtung
- 8: Sichtstrahl
- 9: Fahrzeug
- 10: Codeband

## Patentansprüche

1. Verfahren zur Bestimmung einer Winkelposition zwischen einem Objekt (2) und einem Detektor (1),
wobei das Objekt (2) mehrere jeweils einem unterschiedlichen Blickwinkel oder Bereich von Blickwinkeln des Detektors (1) auf das Objekt (2) zugeordnete unterschiedliche vordefinierte Detektionsbereiche aufweist,
wobei dem Objekt eine zu einer winkelspezifischen Abbildung der Detektionsbereiche ausgebildete Abbildungseinrichtung derart zugeordnet wird, dass - je nach Blickwinkel des Detektors (1) auf das Objekt (2) - der Detektionsbereich, der diesem Blickwinkel oder dem diesen Blickwinkel enthaltenden Bereich zugeordnet ist, oder einer der diesem Blickwinkel oder einem derartigen, diesen Blickwinkel enthaltenden Bereich zugeordneten Detektionsbereiche von dem Detektor (1) - zumindest teilweise oder abschnittsweise - spezifisch detektiert wird, und
wobei unter Berücksichtigung des - zumindest teilweise oder abschnittsweise - spezifisch detektierten Detektionsbereichs eine Winkelposition zwischen dem Objekt (2) und dem Detektor (1) bestimmt wird.

2. Verfahren nach Anspruch 1, **dadurch gekennzeichnet, dass** die Detektionsbereiche jeweils mindestens einen Code, insbesondere einen Data Matrix Code (3), QR-Code oder einen Barcode mit mehreren Balken, aufweisen.

3. Verfahren nach Anspruch 2, **dadurch gekennzeichnet, dass** jedem Blickwinkel oder Bereich von Blickwinkeln ein Code zugeordnet ist, wobei vorzugsweise mehrere derartiger Codes überlagert angeordnet oder übereinander auf einen Träger gedruckt sind.

4. Verfahren nach Anspruch 2 oder 3, **dadurch gekennzeichnet, dass** einfarbige oder mehrfarbige Codes oder Detektionsbereiche verwendet werden.

5. Verfahren nach einem der Ansprüche 1 bis 4, **dadurch gekennzeichnet, dass** das Objekt (2) mehrere - insbesondere um eine halbe Breite, halbe Linienbreite oder halbe Phase eines Codes oder Detektionsbereichs - gegeneinander verschobene oder gegeneinander verkippte Codes oder Detektionsbereiche aufweist, wobei vorzugsweise mehrere Codes oder Detektionsbereiche um einen vorgebbaren Winkel, insbesondere 90°, gegeneinander verdreht angeordnet sind.

6. Verfahren nach einem der Ansprüche 1 bis 5, **dadurch gekennzeichnet, dass** mehrere Codes oder Detektionsbereiche an unterschiedlichen räumlichen Orten - insbesondere paarweise - angeordnet sind.

7. Verfahren nach einem der Ansprüche 1 bis 6, **dadurch gekennzeichnet, dass** der Abbildungseinrichtung und/oder den Detektionsbereichen und/oder dem Detektor (1) eine oder mehrere Trenneinrichtungen zugeordnet werden, sodass lediglich mehrere vordefinierte Detektionsbereiche mittels des Detektors (1) detektiert werden.

8. Verfahren nach einem der Ansprüche 1 bis 7, **dadurch gekennzeichnet, dass** dem Objekt (2) mehrere Abbildungseinrichtungen zugeordnet werden, die jeweils zu unterschiedlichen winkelspezifischen Abbildungen der Detektionsbereiche ausgebildet sind.

9. Verfahren nach einem der Ansprüche 1 bis 8, **dadurch gekennzeichnet, dass** das Objekt (2) mit einer mehrfarbigen Beleuchtung beleuchtet wird, wobei eine Zeitdauer und/oder eine Reihenfolge des Beleuchtens mit einer ersten Lichtfarbe und einer zweiten Lichtfarbe - vorzugsweise mittels einer Steuereinrichtung und weiter vorzugsweise zufällig oder pseudo-zufällig - vorgegeben werden oder wird.

10. Verfahren nach einem der Ansprüche 1 bis 9, **dadurch gekennzeichnet, dass** in Blickrichtung des Detektors (1) hinter dem Objekt (2) ein Reflektor, vorzugsweise Retroreflektor, angeordnet ist.

11. Verfahren nach einem der Ansprüche 1 bis 10, **dadurch gekennzeichnet, dass** eine Winkelposition zwischen dem Objekt (2) und dem Detektor (1) zusätzlich anhand einer winkelabhängigen optischen Verzerrung des vom Detektor (1) aufgenommenen Bildinhalts bestimmt wird und vorzugsweise mit der unter Berücksichtigung des - zumindest teilweise oder abschnittsweise - spezifisch detektierten Detektionsbereichs bestimmten Winkelposition verglichen wird.

12. Verfahren nach einem der Ansprüche 1 bis 11, **dadurch gekennzeichnet, dass** die Abbildungseinrichtung zur winkelspezifischen Abbildung eine Lentikular/Prismeneinrichtung, insbesondere Lentikularfolie (5) mit parallel zueinander angeordneten Zylinderlinsen, eine codierte Linse, insbesondere ein Gobo, Graphical optical blackout, oder eine Linse, die eine 3D-Orientierung ermöglicht, beispielsweise eine Facettenlinse, aufweist.

13. Verfahren nach einem der Ansprüche 1 bis 12, **dadurch gekennzeichnet, dass** als Detektor (1) eine monochrome Kamera, insbesondere eine Kamera mit einem Pixelsensor, verwendet wird, wobei vorzugsweise der Pixelsensor als CMOS-Sensor oder CCD-Sensor oder als Zeilensensor ausgebildet ist.

14. Verfahren nach einem der Ansprüche 1 bis 13, **dadurch gekennzeichnet, dass** der Detektor (1) einem Fahrzeug (9), insbesondere einem fahrerlosen Transportfahrzeug, zugeordnet ist und/oder
dass das Objekt (2) ein Codeband (10), eine zweidimensionale Anordnung mehrerer Codes oder ein Fahrzeug (9) ist, insbesondere ein fahrerloses Transportfahrzeug, wobei vorzugsweise das Fahrzeug (9) zusätzlich einen Detektor (1) aufweist.

15. Vorrichtung zur Bestimmung einer Winkelposition zwischen einem Objekt (2) und einem Detektor (1), insbesondere zur Durchführung des Verfahrens zur Bestimmung eine Winkelposition zwischen einem Objekt (2) und einem Detektor (1) nach einem der Ansprüche 1 bis 14, mit einem Detektor (1) und mehreren Detektionsbereichen,
wobei das Objekt (2) mehrere jeweils einem unterschiedlichen Blickwinkel oder Bereich von Blickwinkeln des Detektors (1) auf das Objekt (2) zugeordnete unterschiedliche vordefinierte Detektionsbereiche aufweist,
wobei dem Objekt (2) eine zu einer winkelspezifischen Abbildung der Detektionsbereiche ausgebildete Abbildungseinrichtung derart zugeordnet ist, dass - je nach Blickwinkel des Detektors (1) auf das Objekt (2) - der Detektionsbereich, der diesem Blickwinkel oder dem diesen Blickwinkel enthaltenden Bereich zugeordnet ist, oder einer der diesem Blickwinkel oder einem derartigen, diesen Blickwinkel enthaltenden Bereich zugeordneten Detektionsbereiche von dem Detektor (1) - zumindest teilweise oder abschnittsweise - spezifisch detektierbar ist, und
wobei unter Berücksichtigung des - zumindest teilweise oder abschnittsweise - spezifisch detektierten Detektionsbereichs eine Winkelposition zwischen dem Objekt (2) und dem Detektor (1) bestimmbar ist.
